# EUROPEAN PATENT APPLICATION

(11) **EP 4 527 670 A1**
(43) Date of publication of application: **26.03.2025**
(21) Application number: 23807005.6
(22) Date of filing: 17.05.2023
(51) Int. Cl.: B60L 15/20

(54) **VEHICLE TORQUE CONTROL METHOD, PROCESSING APPARATUS, AND VEHICLE**

(30) Priority: 20.05.2022 CN 202210557476
(71) Applicant: BYD Company Limited, Shenzhen, Guangdong 518118 (CN)
(72) Inventor: LIAN, Yubo, Shenzhen, Guangdong 518118 (CN); LING, Heping, Shenzhen, Guangdong 518118 (CN); SHI, Mingchuan, Shenzhen, Guangdong 518118 (CN); ZHANG, Hao, Shenzhen, Guangdong 518118 (CN); LI, Pengxiang, Shenzhen, Guangdong 518118 (CN)
(74) Representative: Mathys & Squire
(86) International application number: PCT/CN2023/094867
(87) International publication number: WO 2023/222054

(57) **Abstract**

A vehicle torque control method. The method comprises: step S1, obtaining steering wheel angle and vehicle steering speed parameters; step S2, determining the current driving state of a vehicle according to the steering wheel angle and vehicle steering speed parameters; and step S3, controlling output torques of front and rear drivers of the vehicle according to the current driving state of the vehicle. Further disclosed are a processing apparatus, a vehicle, and a storage medium. The method determines the current driving state of the vehicle by means of a steering wheel angle and a vehicle steering speed, such that the determination accuracy is higher, and the torques of the drivers can be better accurately controlled according to the driving state, thereby improving the stability of the vehicle in the driving process.

## Description

### CROSS-REFERENCE TO RELATED APPLICATIONS

The present disclosure claims priority to Chinese Patent Application No. CN202210557476.X, entitled "VEHICLE TORQUE CONTROL METHOD, PROCESSING APPARATUS, AND VEHICLE" and filed on May 20, 2022. The entire content of the above-referenced applications is incorporated herein by reference.

### FIELD

The present disclosure relates to the field of vehicle control technologies, and specifically, to a vehicle torque control method, a processing apparatus, and a vehicle.

### BACKGROUND

During vehicle driving, output torques of wheels have a high impact on stability of vehicle driving, and especially when a vehicle is turning, obvious jitter and shaking during vehicle driving may be caused if an output torque of each wheel is not appropriate. For an electric vehicle, driving stability of the vehicle can be improved by adjusting an output torque of each motor. Appropriate power output is related to a current driving status of the vehicle, but there is no accurate method to detect a driving status of the vehicle in the field at present. How to accurately determine a driving state of a vehicle and how to adjust power of the electric vehicle based on the driving state is a technical problem to be solved in this field.

### SUMMARY

An objective of the present disclosure is to provide an optimized vehicle torque control method.

According to a first aspect of the present disclosure, a vehicle torque control method is provided, including:

A steering wheel angle and a vehicle steering speed parameter are obtained.

A current driving state of a vehicle is determined based on the steering wheel angle and the vehicle steering speed parameter.

Output torques of a front driver and a rear driver of the vehicle are controlled based on the current driving state of the vehicle.

Optionally,
the driving state includes a curve entering state and a curve exiting state; and
that a current driving state of a vehicle is determined based on the steering wheel angle and a vehicle steering speed parameter includes:

A steering wheel angular velocity and the vehicle steering acceleration parameter are calculated.

It is determined that the driving state is a curve entering state when one of the steering wheel angular velocity or the vehicle steering acceleration parameter is greater than 0, or

It is determined that the driving state is a curve exiting state when one of the steering wheel angular velocity or the vehicle steering acceleration parameter is less than 0.

Optionally, that output torques of a front driver and a rear driver of the vehicle are controlled based on the current driving state of the vehicle includes:
If the vehicle is in a curve entering state, the output torque of the front driver of the vehicle is reduced or the output torque of the rear driver of the vehicle is increased, or the output torque of the front driver of the vehicle is reduced and the output torque of the rear driver of the vehicle is increased, or
if the vehicle is in a curve exiting state, the output torque of the front driver of the vehicle is increased or the output torque of the rear driver of the vehicle is reduced, or the output torque of the front driver of the vehicle is increased and the output torque of the rear driver of the vehicle is reduced.

Optionally, that output torques of a front driver and a rear driver of the vehicle are controlled based on the current driving state of the vehicle includes:
If the vehicle is in a curve entering state, the output torque of the front driver of the vehicle is reduced and the output torque of the rear driver of the vehicle is increased, and a total output torque of the front driver and the rear driver remains unchanged, or
if the vehicle is in a curve exiting state, the output torque of the front driver of the vehicle is increased and the output torque of the rear driver of the vehicle is reduced, and the total output torque of the front driver and the rear driver remains unchanged.

Optionally, the curve entering state includes a curve entering preparation state and a curve entering progress state.
If the steering wheel angular velocity is greater than 0 and the vehicle steering acceleration parameter is equal to 0, it is determined that the vehicle is in the curve entering preparation state, or
if the steering wheel angular velocity is greater than 0 and the vehicle steering acceleration parameter is greater than 0, it is determined that the vehicle is in the curve entering progress state.

When the vehicle is in the curve entering preparation state or the curve entering progress state, that the output torque of the rear driver of the vehicle is increased includes:

A first single-step torque adjustment step size is determined based on a current output torque of the rear driver and the steering wheel angle.

The output torque of the rear driver of the vehicle is increased in a stepwise manner based on the first single-step torque adjustment step size.

Optionally, that a first single-step torque adjustment step size is determined based on a current output torque of the rear driver and the steering wheel angle includes:

A first adjustment step size coefficient is determined based on the current output torque of the rear driver, and a second adjustment step size coefficient proportional to the steering wheel angle is determined based on the steering wheel angle. The first single-step torque adjustment step size is a product of the first adjustment step size coefficient and the second adjustment step size coefficient.

Optionally, the curve exiting state includes a curve exiting preparation state and a curve exiting progress state.
If the steering wheel angular velocity is less than 0 and the vehicle steering acceleration parameter is equal to 0, it is determined that the vehicle is in the curve exiting preparation state, or
if the steering wheel angular velocity is less than 0 and the vehicle steering acceleration parameter is less than 0, it is determined that the vehicle is in the curve exiting progress state.

If the vehicle is in the curve exiting preparation state or the curve exiting progress state, that the output torque of the front driver of the vehicle is increased includes:
A second single-step torque adjustment step size is determined based on a current output torque of the front driver and the steering wheel angle.

The output torque of the front driver of the vehicle is increased in a stepwise manner based on the second single-step torque adjustment step size.

Optionally, that a second single-step torque adjustment step size is determined based on a current output torque of the front driver and the steering wheel angle includes:

A third adjustment step size coefficient is determined based on the current output torque of the front driver, and a fourth adjustment step size coefficient proportional to the steering wheel angle is determined based on the steering wheel angle. The second single-step torque adjustment step size is a product of the third adjustment step size coefficient and the fourth adjustment step size coefficient.

Optionally, the curve entering state further includes a curve entering convergence state, and if the steering wheel angular velocity is equal to 0 and the vehicle steering acceleration parameter is greater than 0, it is determined that the vehicle is in the curve entering convergence state.

When the vehicle is in the curve entering convergence state, that the output torque of the rear driver of the vehicle is increased includes:
A predetermined first convergence coefficient is obtained, and a product of the first single-step torque adjustment step size and the first convergence coefficient is taken as a third single-step torque adjustment step size. The first convergence coefficient is greater than 0 and less than 1.

The output torque of the rear driver of the vehicle is increased in a stepwise manner based on the third single-step torque adjustment step size.

Optionally, the curve exiting state further includes a curve exiting convergence state, and if the steering wheel angular velocity is equal to 0 and the vehicle steering acceleration parameter is less than 0, it is determined that the vehicle is in the curve exiting convergence state.

When the vehicle is in the curve exiting convergence state, that the output torque of the front driver of the vehicle is increased includes:
A predetermined second convergence coefficient is obtained, and a product of the second single-step torque adjustment step size and the second convergence coefficient is taken as a fourth single-step torque adjustment step size. The second convergence coefficient is greater than 0 and less than 1.

The output torque of the front driver of the vehicle is increased in a stepwise manner based on the fourth single-step torque adjustment step size.

Optionally, the driving state includes a curve holding state and a straight-ahead state.

If the steering wheel angular velocity is 0 and the vehicle steering acceleration parameter is also 0, the vehicle is in the curve holding state or the straight-ahead state.

When the vehicle is in the curve holding state or the straight-ahead state, that output torques of a front driver and a rear driver of the vehicle are controlled includes:
The output torques of the front driver and the rear driver of the vehicle remain unchanged.

Optionally, the steering speed parameter includes at least one of the following parameters: a yaw rate, a sideslip angular velocity, a lateral velocity and a degree of understeer; and
the steering acceleration parameter includes at least one of the following parameters: a yaw angle acceleration, a sideslip angle acceleration, a lateral acceleration and an understeer gradient.

The present disclosure further provides a processing apparatus. The processing apparatus is applied to the above torque control method, and includes:
a signal acquisition module, configured to obtain a steering wheel angle and a vehicle steering speed parameter;
a state determining module, configured to determine a current driving state of a vehicle based on the steering wheel angle and the vehicle steering speed parameter; and
a driver adjusting module, configured to control output torques of a front driver and a rear driver of the vehicle based on the current driving state of the vehicle.

The present disclosure further includes a vehicle. The vehicle includes a front driver, a rear driver, and the above processing apparatus. The processing apparatus is configured to perform the above vehicle torque control method to control output torques of the front driver and the rear driver.

The present disclosure further provides a computer-readable storage medium. The computer-readable storage medium stores a computer program, and when the computer program is executed, the above vehicle torque control method is implemented.

A technical effect of the present disclosure is that a current driving state of a vehicle is determined by a steering wheel angle and a vehicle steering speed, and determining accuracy is higher, so that torques of drivers can be better controlled accurately based on the driving state, so as to improve stability of the vehicle during driving.

Other features and advantages of the present disclosure will become apparent from the following detailed description of exemplary embodiments of the present disclosure with reference to accompanying drawings.

### BRIEF DESCRIPTION OF THE DRAWINGS

The accompanying drawings, which form a part of the specification, illustrate embodiments of the present disclosure and together with the specification, are intended to explain the principles of the present disclosure.
FIG. 1 is a schematic diagram of a vehicle torque adjustment method;
FIG. 2 is a flowchart of determining a driving state of a vehicle;
FIG. 3 is a flowchart of determining another driving state of a vehicle;
FIG. 4 is a curve graph of relevant parameters during vehicle driving; and
FIG. 5 is a schematic diagram of a processing apparatus for a vehicle.

In the drawings:
0. Processing apparatus; 1. Signal acquisition module; 2. State determining module; 3. Driver adjusting module.

### DETAILED DESCRIPTION

Various exemplary embodiments of the present disclosure are now described in detail with reference to the accompanying drawings. It should be noted that unless otherwise specified, relative arrangement, numerical expressions, and numerical values of components and steps set forth in the embodiments do not limit the scope of the present disclosure.

The following descriptions of at least one exemplary embodiment are merely illustrative in nature, and in no way constitute any limitation on the present disclosure and application or use thereof.

Technologies and devices known to those of ordinary skill in related arts may not be discussed in detail, but where appropriate, the technologies and the devices should be considered as a part of the specification.

In all examples shown and discussed herein, any specific value should be construed as merely exemplary and not as limitations. Therefore, other examples of exemplary embodiments may have different values.

It should be noted that similar reference numerals and letters indicate similar items in the following accompanying drawings. Therefore, once an item is defined in one accompanying drawing, the item does not need to be further discussed in subsequent accompanying drawings.

The present disclosure provides a vehicle torque adjustment method. The vehicle torque adjustment method can be used to identify a current driving state of a vehicle during vehicle driving, and correspondingly adjust output torques of drivers of the vehicle based on the identified driving state, so as to improve stability and driving comfort of the vehicle.

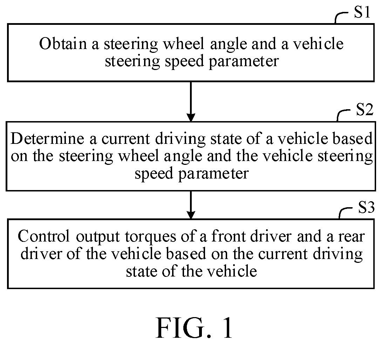

As shown in FIG. 1, the present disclosure provides a vehicle torque control method, including:
S1: A steering wheel angle and a vehicle steering speed parameter are obtained.
S2: A current driving state of a vehicle is determined based on the steering wheel angle and the vehicle steering speed parameter.
S3: Output torques of a front driver and a rear driver of the vehicle are controlled based on the current driving state of the vehicle.

For example, the front driver and the rear driver of the vehicle may be both motors, and may be specifically synchronous motors, asynchronous motors or other types of motors. Types of the front motor and the rear motor may be the same or different.

In step S1, the steering wheel angle can represent a turning requirement for the vehicle, and the vehicle steering speed parameter can represent a deflection degree of the vehicle around a vertical axis during driving.

With regard to the steering wheel angle, for example, when a steering wheel is turned to face the front, the steering wheel angle is 0°, or when the steering wheel is turned to the left or right by 30°, the steering wheel angle is 30°. If the steering wheel is turned to the left by one turn or to the right by one turn, the steering wheel angle is 180°. The rest can be done in the same manner. In practical calculation application, to determine a specific turning direction of the steering wheel, an angle by which the steering wheel turns to the left may be defined as a positive angle and an angle by which the steering wheel turns to the right may be defined as a negative angle, or a steering wheel turning angle may be defined as a positive angle without distinguishing between a left turn and a right turn. With regard to the vehicle steering speed, for example, an angular velocity at which an entire vehicle body deflects to the left or right is the vehicle steering speed.

In the technical solution of the present disclosure, a current steering wheel angle and steering speed parameter can be detected by an in-vehicle sensor, such as a steering wheel turning angle sensor. After the current steering wheel angle and steering speed parameter are obtained, the obtained data can be processed by mean filtering, smoothing filtering, Kalman filtering, and the like to remove noise signals.

In step S2, different driving states can be classified based on different methods for adjusting the front and rear torques of the vehicle. Through analysis and determining of the steering wheel angle, the steering speed parameter and related derived data, the driving state that the vehicle is in can be determined.

According to the present disclosure, the output torques of the drivers of the vehicle are correspondingly adjusted based on the current different driving states of the vehicle, so that the output torques of the front driver and the rear driver of the vehicle can be properly adjusted while the output torques required by the current driving state of the vehicle are satisfied, thereby avoiding understeer or oversteer, improving vehicle driving reliability, and also improving vehicle driving experience.

When the vehicle driving state is determined, determining of whether the steering wheel angle, a steering wheel angular velocity, the steering speed parameter and a steering acceleration parameter are close to 0 and determining of whether the above parameters are stable and have little fluctuation are involved. This involves designing a threshold range for the above parameters. It should be noted that the "remaining unchanged" involved in this technical solution may mean being completely unchanged, or mean that the fluctuation of parameters is less than a critical value.

For example, critical values may be designed for the steering wheel angle and the steering speed parameter. A predetermined angle is the critical value of the steering wheel angle, and a predetermined steering speed parameter is the critical value of the steering speed parameter.

An absolute value of the obtained current steering wheel angle and an absolute value of the obtained steering speed parameter are compared with the predetermined angle and the predetermined steering speed parameter respectively. It can be determined whether the steering wheel angle and the vehicle steering speed are stable.

Optionally, to facilitate determining of the current driving state of the vehicle, the steering wheel angle may be set to be positive during left turn, with a turning direction symbol value being 1 in this case; and the steering wheel angle may be set to be negative during right turn, with a turning direction symbol value being -1 in this case.

The current driving state of the vehicle can be determined based on a relationship between the steering wheel angular velocity and a predetermined steering wheel angular velocity and a relationship between the steering speed parameter and the predetermined steering speed parameter with reference to the turning direction symbol value.

In step S3, the output torques of the drivers of the vehicle are correspondingly adjusted based on current different driving states of the vehicle determined in step S2, so as to improve stability and driving comfort of the vehicle.

In the driving state processing method according to the present disclosure, the current steering wheel angular velocity and steering acceleration parameter can be calculated by obtaining the steering wheel angle and the steering speed parameter in real time, so that the current driving state of the vehicle can be accurately determined. According to the present disclosure, through real-time obtaining of the steering wheel angle and the steering speed parameter, the driving state of the vehicle is determined by the steering wheel angle and the steering speed parameter, so that misjudgment of the driving state caused by a signal lag from steering wheel turning to actual turning of the vehicle is avoided, and accuracy of determining the driving state of the vehicle is improved.

On this basis, according to the present disclosure, the output torques of the drivers of the vehicle are correspondingly adjusted based on the determined current driving state of the vehicle. In the method for adjusting the output torques of the drivers of the vehicle according to the present disclosure, corresponding matching can be performed based on the current driving state of the vehicle, thereby avoiding over-adjustment and insufficient adjustment of the output torques of the drivers of the vehicle, improving adjustment rationality of the output torques of the drivers of the vehicle, avoiding uncomfortable experience caused by a sudden change in the output torques of the drivers of the vehicle, and improving driving experience.

In some implementations of the present disclosure, the steering speed parameter is a yaw rate of the vehicle. The yaw rate of the vehicle can clearly and visually denote a swing posture of the vehicle itself during turning, and the yaw rate of the vehicle can be directly measured by a sensor. The yaw rate can improve the solution accuracy in the technical solution of the present disclosure. Correspondingly, the steering acceleration parameter is a vehicle steering acceleration. In the following implementations, descriptions are provided with a yaw rate as a steering speed parameter and a yaw angle acceleration as a steering acceleration parameter.

In other implementations of the present disclosure, at least one of a sideslip angular velocity, a lateral velocity, a degree of understeer and the yaw rate may be used as the steering speed parameter. Correspondingly, at least one of a sideslip angle acceleration, a lateral acceleration, an understeer gradient and a yaw angle acceleration may be used as the steering acceleration parameter.

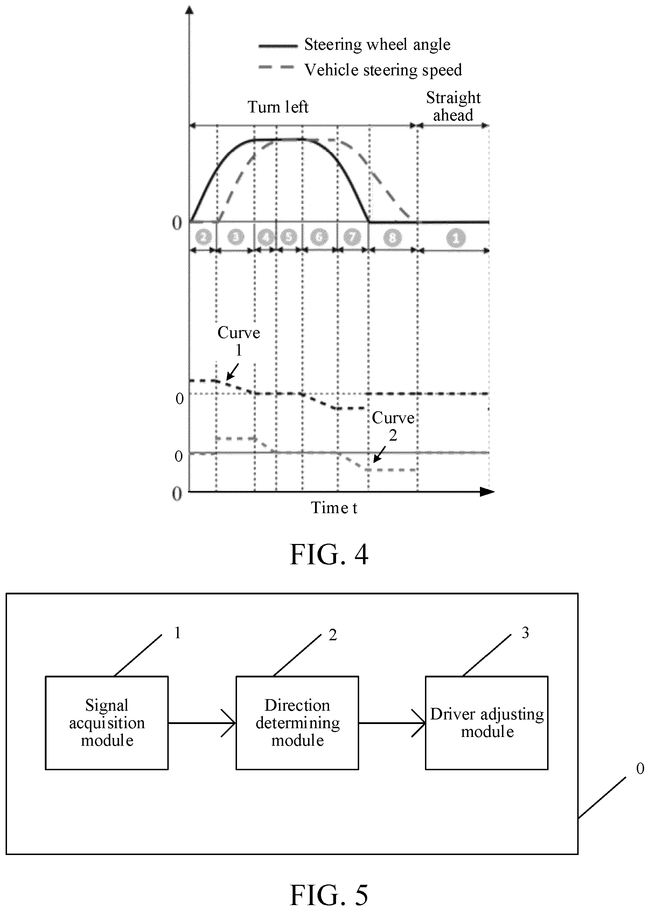

Optionally, the driving state may include a curve holding state and a straight-ahead state. As shown in FIG. 4, the curve holding state is shown in ⑤, and the straight-ahead state is shown in ①. When the vehicle is in the curve holding state or the straight-ahead state, the output torques of the front driver and the rear driver of the vehicle can be kept unchanged, that is, the output torques of the front driver and the rear driver of the vehicle at a previous moment are maintained without adjustment. When in either of the two driving states, the vehicle is in a relatively stable driving stage, and maintaining a stable torque output enables the vehicle to pass through this driving stage smoothly.

When the vehicle is in the curve holding state or the straight-ahead state, the steering wheel angular velocity of the vehicle is equal to 0, and the vehicle steering acceleration is equal to 0. It should be noted that the parameter being equal to 0 herein means that the value may be 0, or that the parameter may be in a threshold range close to 0. Due to road conditions, data acquisition noise and other reasons, even if the vehicle is in a straight-ahead state or a curve holding state, the steering wheel angular velocity and the vehicle steering acceleration often fluctuate up and down in a small range. Therefore, the predetermined steering wheel angular velocity and a predetermined yaw angle acceleration may be preset for the above determining. The predetermined steering wheel angular velocity is a threshold close to 0. If a current steering wheel angular velocity is less than the predetermined steering wheel angular velocity, it is believed that the predetermined steering wheel angular velocity is equal to 0. The predetermined yaw angle acceleration is a threshold close to 0. If a current vehicle steering acceleration is less than the predetermined yaw angle acceleration, it is believed that the predetermined yaw angle acceleration is equal to 0.

Four predetermined values are mentioned in the present disclosure, and optional values of each predetermined value are given in the following comparison table for reference. For the predetermined values mentioned later, refer to the following comparison table.

| Predetermined value | Optional value |
|---|---|
| Predetermined angle (°) | 0 to 10 |
| Predetermined yaw rate (rad/s) | 0 to 0.1 |
| Predetermined steering wheel angular velocity (°/s) | 0 to 10 |
| Predetermined yaw angle acceleration (rad/s^2) | 0 to 0.0025 |

When the vehicle is in the curve holding state or the straight-ahead state, that output torques of a front driver and a rear driver of the vehicle are controlled includes: The output torques of the front driver and the rear driver of the vehicle remain unchanged.

Optionally, whether the vehicle is specifically in the curve holding state or the straight-ahead state may be distinguished in detail.

In this embodiment, the driving state can be further determined by the obtained steering wheel angle and vehicle steering speed while the steering wheel angular velocity is equal to 0 and the vehicle steering acceleration is equal to 0. If neither of the obtained steering wheel angle and vehicle steering speed is 0, it can be believed that the vehicle is currently in the curve holding state. If the obtained steering wheel angle and vehicle steering speed are both 0, that is, the steering wheel is not turned and the vehicle is not deflected, it can be believed that the vehicle is currently in the straight-ahead state.

Herein, the steering wheel angle and the vehicle steering speed being both 0 also means that the parameters are within a threshold range close to 0 and are allowed to fluctuate. Because the vehicle also needs to fine-tune the direction in the straight-ahead state, when the obtained steering wheel angle and vehicle steering speed are both 0 or kept in a small range near 0, it can be believed that the vehicle is currently in the straight-ahead state.

Therefore, the predetermined angle and the predetermined yaw rate may be preset for the above determining. The predetermined angle is a threshold of the steering wheel angle close to 0°, and the predetermined yaw rate is a threshold of the vehicle steering speed close to 0. If the absolute value of the current steering wheel angle is less than the predetermined angle, it is believed that the steering wheel angle is equal to 0°. If the absolute value of the current vehicle steering speed is less than the predetermined yaw rate, it is believed that the vehicle steering speed is equal to 0.

In another optional implementation, considering different road conditions during actual vehicle driving, whether the vehicle is in the curve holding state can be determined based on the absolute value of the obtained steering wheel angle and the absolute value of the obtained vehicle steering speed. Specifically, if the absolute value of the obtained steering wheel angle is greater than the predetermined angle and the absolute value of the obtained vehicle steering speed is greater than the predetermined yaw rate, it is determined that the vehicle is in the curve holding state.

Taking a vehicle with a front driver and a rear driver as an example, when the vehicle is in a straight-ahead state, the torque distribution of the two drivers is as follows:
A torque T_{f} of the front driver is a total output torque Tₐ multiplied by a straight-ahead distribution coefficient c₀; and
a torque Tᵣ of the rear driver is the total output torque Tₐ minus the torque T_{f} of the front driver.

The straight-ahead distribution coefficient c₀ is a number between 0 and 1, and is optionally 0.5. For an optional range and an optional value of c₀, refer to the following comparison table.

Six coefficients are mentioned in the present disclosure, and an optional range and an optional value of each coefficient are given in the following comparison table for reference. For the coefficients mentioned later, refer to the following comparison table.

| Coefficient | Optional range | Optional value |
|---|---|---|
| c₀ | 0 to 1 | 0.5 |
| c₁ | 1 to 10 | 5 |
| c₂ | 1 to 10 | 6 |
| c₃ | 1 to 10 | 4 |
| c₄ | 1 to 10 | 7 |
| c₅ | 0 to 1 | 0.7 |
| c₆ | 0 to 1 | 0.7 |

Optionally, the driving state includes a curve entering state and a curve exiting state.

That a current driving state of a vehicle is determined based on the steering wheel angle and a vehicle steering speed includes:
A steering wheel angular velocity and a vehicle steering acceleration are calculated.

It is determined that the driving state is a curve entering state when one of the steering wheel angular velocity or the vehicle steering acceleration is greater than 0, or
it is determined that the driving state is a curve exiting state when one of the steering wheel angular velocity or the vehicle steering acceleration is less than 0.

In this embodiment, the turning process of the vehicle may be divided into a curve entering state, a curve exiting state and the above-mentioned curve holding state. The curve entering state begins from a time when the vehicle starts to turn the steering wheel and ends before the vehicle is in the curve holding state. The curve exiting state begins from a time when the vehicle ends the curve holding state, and ends before the vehicle is in the straight-ahead state. For example, when the vehicle turns left, the steering wheel turns left from a position 0 to a target position in the curve entering state, or the steering wheel turns right from the target position to the position 0 (is straightened) in the curve exiting state. When the vehicle turns right, the steering wheel turns right from the position 0 to the target position in the curve entering state, or the steering wheel turns left from the target position to the position 0 (is straightened) in the curve exiting state.

On this basis, as shown in FIG. 4, a curve 1 denotes a steering wheel angular velocity, and the curve 1 corresponds to a slope of an upper steering wheel angle (steering wheel turning angle) curve. A curve 2 is a vehicle steering acceleration, and the curve 2 corresponds to a slope of an upper vehicle steering speed curve. When one of the calculated steering wheel angular velocity or vehicle steering acceleration is greater than 0, it can be determined that the vehicle is in the curve entering state. In this state, the steering wheel starts to be turned, and the vehicle starts to gradually establish a turning posture.

When one of the calculated steering wheel angular velocity or vehicle steering acceleration is less than 0, it can be determined that the vehicle is in the curve exiting state. In this state, the steering wheel starts to be turned in a reverse direction, and the vehicle is ready to exit a curve gradually.

Optionally, that output torques of a front driver and a rear driver of the vehicle are controlled based on the current driving state of the vehicle includes:

If the vehicle is in a curve entering state, the output torque of the front driver of the vehicle is reduced or the output torque of the rear driver of the vehicle is increased, or the output torque of the front driver of the vehicle is reduced and the output torque of the rear driver of the vehicle is increased, or if the vehicle is in a curve exiting state, the output torque of the front driver of the vehicle is increased or the output torque of the rear driver of the vehicle is reduced, or the output torque of the front driver of the vehicle is increased and the output torque of the rear driver of the vehicle is reduced.

Output torques of drivers are regulated with a vehicle with at least a front driver and a rear driver as an example.

In this embodiment, the output torques of the drivers of the vehicle are correspondingly adjusted based on the determined current driving state of the vehicle. Specifically, if the vehicle is in a curve entering state, the output torque of the front driver of the vehicle is reduced and the output torque of the rear driver of the vehicle is increased, or the output torque of the front driver of the vehicle is reduced and the output torque of the rear driver of the vehicle is increased, so as to improve the steering capability of the vehicle, avoid understeer and improve the curve entering steering capability of the vehicle. If the vehicle is in a curve exiting state, the output torque of the front driver of the vehicle is increased and the output torque of the rear driver of the vehicle is reduced, or the output torque of the front driver of the vehicle is increased and the output torque of the rear driver of the vehicle is reduced to avoid oversteer.

In this embodiment, the output torque of the front driver of the vehicle or the output torque of the rear driver of the vehicle is correspondingly adjusted based on a different driving state of the vehicle, so that oversteer can be avoided while a sufficient steering capability is ensured, distribution rationality of the output torques of the front driver and the rear driver of the vehicle is improved, and the driving stability of the vehicle is also improved.

Optionally, that output torques of a front driver and a rear driver of the vehicle are controlled based on the current driving state of the vehicle includes:

If the vehicle is in a curve entering state, the output torque of the front driver of the vehicle is reduced and the output torque of the rear driver of the vehicle is increased, and a total output torque of the front driver and the rear driver remains unchanged, or if the vehicle is in a curve exiting state, the output torque of the front driver of the vehicle is increased and the output torque of the rear driver of the vehicle is reduced, and the total output torque of the front driver and the rear driver remains unchanged.

When the vehicle has at least the front driver and the rear driver, during turning torque adjustment, the sum of the output torque of the front driver of the vehicle and the output torque of the rear driver of the vehicle is a total driver output torque of the vehicle, and the total driver output torque of the vehicle remains unchanged.

In this embodiment, the output torques of the drivers of the vehicle are correspondingly adjusted based on the determined current driving state of the vehicle. Specifically, if the vehicle is in a curve entering state, the output torque of the front driver of the vehicle is reduced and the output torque of the rear driver of the vehicle is increased, so that the output torque of the rear driver of the vehicle is greater than the output torque of the front driver of the vehicle, so as to improve the steering capability of the vehicle, avoid understeer and improve the curve entering steering capability of the vehicle. If the vehicle is in a curve exiting state, the output torque of the front driver of the vehicle is increased and the output torque of the rear driver of the vehicle is reduced, to avoid oversteer.

The driver output torque adjustment of the vehicle in this embodiment is actually to transfer the output torque of the front driver of the vehicle to the output torque of the rear driver of the vehicle to improve the steering capability and avoid understeer, or to transfer the output torque of the rear driver of the vehicle to the output torque of the front driver of the vehicle to avoid oversteer.

Optionally, the curve entering state includes a curve entering preparation state and a curve entering progress state.

If the steering wheel angular velocity is greater than 0 and the vehicle steering acceleration is equal to 0, it is determined that the vehicle is in the curve entering preparation state. If the steering wheel angular velocity is greater than 0 and the vehicle steering acceleration is greater than 0, it is determined that the vehicle is in the curve entering progress state. For example, as shown in FIG. 4, the curve entering preparation state is shown in ②, and the curve entering progress state is shown in ③.

When the vehicle is in the curve entering preparation state or the curve entering progress state, that the output torque of the rear driver of the vehicle is increased includes:

A first single-step torque adjustment step size is determined based on a current output torque of the rear driver and the steering wheel angle; and the output torque of the rear driver of the vehicle is increased in a stepwise manner based on the first single-step torque adjustment step size.

In this embodiment, the curve entering state of the vehicle may be divided into the curve entering preparation state and the curve entering progress state. If the steering wheel angular velocity is greater than 0 and the vehicle steering acceleration is equal to 0, that is, the steering wheel starts to turn but the vehicle does not start to turn in its own posture due to a lag of turning power transmission, it is determined that the vehicle is in the curve entering preparation state. If the steering wheel angular velocity is greater than 0 and the vehicle steering acceleration is greater than 0, that is, the steering wheel continues to turn and the vehicle also begins to turn, it is determined that the vehicle is in the curve entering progress state. In this embodiment, the curve entering state of the vehicle can be monitored by determining the steering wheel angular velocity and the vehicle steering acceleration in real time.

It should be noted that in this technical solution, a relationship between the steering wheel angular velocity and 0 may be that the steering wheel angular velocity is equal to or greater than 0 in the mathematical sense, or may be a threshold close to 0 that is formed by the above-mentioned predetermined steering wheel angular velocity. As long as the current steering wheel angular velocity is within the threshold range, it can be believed that the steering wheel angular velocity is equal to 0. Similarly, a relationship between the vehicle steering acceleration and 0 may be that the vehicle steering acceleration is equal to or greater than 0 in the mathematical sense, or may be a threshold close to 0 that is formed by the above-mentioned predetermined yaw angle acceleration. As long as the parameter is within the threshold range, it can be believed that the parameter is equal to 0.

When the vehicle is in the curve entering preparation state or the curve entering progress state, the output torque of the rear driver of the vehicle is increased to improve the steering capability of the vehicle and avoid understeer. Specifically, a first single-step torque adjustment step size is first determined based on a current output torque of the rear driver and the steering wheel angle, and then the output torque of the rear driver of the vehicle is increased in a stepwise manner based on the first single-step torque adjustment step size. In this embodiment, in this stepwise mode, the output torque of the rear driver of the vehicle can be gradually adjusted by the stepping characteristics while the output torque is increased to ensure the steering capability, thereby avoiding an impact caused by a sudden change in the output torque of the rear driver of the vehicle, improving curve entering stability of the vehicle and also improving vehicle driving experience.

Optionally, that a first single-step torque adjustment step size is determined based on a current output torque of the rear driver and the steering wheel angle includes:

A first adjustment step size coefficient c₁ is determined based on the current output torque of the rear driver, and a second adjustment step size coefficient c₂ proportional to the steering wheel angle is determined based on the steering wheel angle. The first single-step torque adjustment step size is a product of the first adjustment step size coefficient c₁ and the second adjustment step size coefficient c₂. For optional ranges and optional values of c₁ and c₂, refer to the above-mentioned comparison table. Specifically, a corresponding relationship between a torque of the rear driver and c₁ and a corresponding relationship between the steering wheel angle and c₂ may be preset, and for example, are stored in a memory in the form of a table or formula. When c₁ and c₂ need to be determined, c₁ and c₂ are obtained by looking up a relevant table or calculated by a formula. A specific method for calculating c₁ and c₂ is not limited in this embodiment. A method for determination other parameters in the following may be determined with reference to the above method.

In this embodiment, the first adjustment step size coefficient c₁ is determined based on the current output torque of the rear driver, and the second adjustment step size coefficient c₂ proportional to the steering wheel angle is determined based on the steering wheel angle. The first single-step torque adjustment step size is the product of the first adjustment step size coefficient c₁ and the second adjustment step size coefficient c₂. For optional ranges and optional values of c₁ and c₂, refer to the above-mentioned comparison table. Based on the first single-step torque adjustment step size, the output torque of the rear driver of the vehicle can be increased in the stepwise manner, thereby avoiding an impact caused by a sudden change in the output torque of the rear driver of the vehicle, improving curve entering stability of the vehicle and also improving vehicle driving experience.

Optionally, the curve exiting state includes a curve exiting preparation state and a curve exiting progress state.

If the steering wheel angular velocity is less than 0 and the vehicle steering acceleration is equal to 0, it is determined that the vehicle is in the curve exiting preparation state. If the steering wheel angular velocity is less than 0 and the vehicle steering acceleration is less than 0, it is determined that the vehicle is in the curve exiting progress state. For example, as shown in FIG. 4, the curve exiting preparation state is shown in ⑥, and the curve exiting progress state is shown in ⑦.

If the vehicle is in the curve exiting preparation state or the curve exiting progress state, that the output torque of the front driver of the vehicle is increased includes: A second single-step torque adjustment step size is determined based on a current output torque of the front driver and the steering wheel angle. The output torque of the front driver of the vehicle is increased in a stepwise manner based on the second single-step torque adjustment step size.

In this embodiment, the curve exiting state of the vehicle may be divided into the curve exiting preparation state and the curve exiting progress state. If the steering wheel angular velocity is less than 0 and the vehicle steering acceleration is equal to 0, that is, the steering wheel turning angle starts to be reduced but the vehicle posture does not start to change due to an execution lag, it is determined that the vehicle is in the curve exiting preparation state. If the steering wheel angular velocity is less than 0 and the vehicle steering acceleration is less than 0, that is, the steering wheel turning angle is still gradually decreasing and the vehicle begins to change the posture, it is determined that the vehicle is in the curve exiting progress state. In this embodiment, the curve exiting state of the vehicle can be monitored by determining the steering wheel angular velocity and the vehicle steering acceleration in real time.

In this implementation, a relationship between the steering wheel angular velocity and 0 and a relationship between the vehicle steering acceleration and 0 may be determined by a threshold range formed by the above predetermined steering wheel angular velocity and predetermined yaw angle acceleration. Since the steering wheel angular velocity and the vehicle steering acceleration are negative in the curve exiting state, absolute values may be used for comparison during comparison with the threshold range.

When the vehicle is in the curve exiting preparation state or the curve exiting progress state, the output torque of the front driver of the vehicle is increased to avoid oversteer. Specifically, a second single-step torque adjustment step size is first determined based on a current output torque of the front driver and the steering wheel angle, and then the output torque of the front driver of the vehicle is increased in a stepwise manner based on the second single-step torque adjustment step size. In this embodiment, in this stepwise mode, the output torque of the front driver of the vehicle can be gradually adjusted by the stepping characteristics while the output torque is increased to ensure the steering capability, thereby avoiding an impact caused by a sudden change in the output torque of the front driver of the vehicle, improving curve exiting stability of the vehicle and also improving vehicle driving experience.

Optionally, that a second single-step torque adjustment step size is determined based on a current output torque of the front driver and the steering wheel angle includes: A third adjustment step size coefficient c₃ is determined based on the current output torque of the front driver. A fourth adjustment step size coefficient c₄ proportional to the steering wheel angle is determined based on the steering wheel angle. The second single-step torque adjustment step size is a product of the third adjustment step size coefficient c₃ and the fourth adjustment step size coefficient c₄. For optional ranges and optional values of c₃ and c₄, refer to the above-mentioned comparison table.

In this embodiment, the third adjustment step size coefficient c₃ is determined based on the current output torque of the front driver, and the fourth adjustment step size coefficient c₄ proportional to the steering wheel angle is determined based on the steering wheel angle. The second single-step torque adjustment step size is a product of the third adjustment step size coefficient c₃ and the fourth adjustment step size coefficient c₄. Based on the second single-step torque adjustment step size, the output torque of the front driver of the vehicle can be increased in the stepwise manner, thereby avoiding an impact caused by a sudden change in the output torque of the front driver of the vehicle, improving curve exiting stability of the vehicle and also improving vehicle driving experience.

Optionally, the curve entering state further includes a curve entering convergence state, and if the steering wheel angular velocity is equal to 0 and the vehicle steering acceleration is greater than 0, it is determined that the vehicle is in the curve entering convergence state. For example, as shown in FIG. 4, the curve entering convergence state is shown in ④.

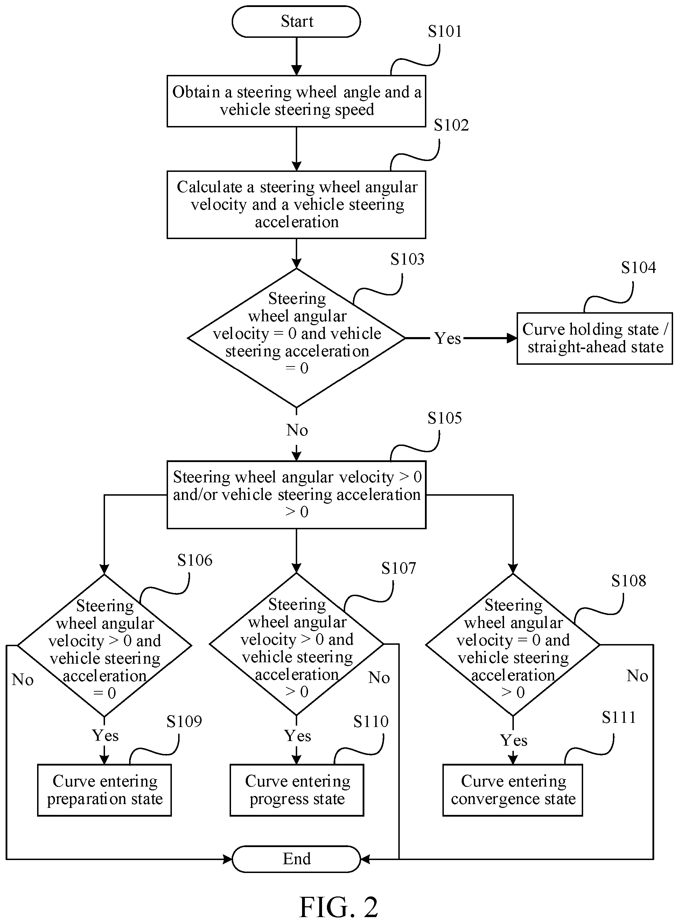

A flowchart of determining a driving state of a vehicle according to the present disclosure is described below with reference to FIG. 2, mainly including the following steps.

S101: A steering wheel angle and a vehicle steering speed are obtained.

S102: A steering wheel angular velocity and a vehicle steering acceleration are calculated.

S103: It is determined whether the steering wheel angular velocity and the vehicle steering acceleration are both equal to 0.

S104: If yes, the vehicle is in a curve holding state or a straight-ahead state.

S105: If not, and the steering wheel angular velocity is greater than 0 and/or the vehicle steering acceleration is greater than 0, next determining is entered.

S106: If the steering wheel angular velocity is greater than 0 and the vehicle steering acceleration is equal to 0,

S109: the vehicle is in a curve entering preparation state.

S107: If the steering wheel angular velocity is greater than 0 and the vehicle steering acceleration is greater than 0,

S110: the vehicle is in a curve entering progress state.

S108: If the steering wheel angular velocity is equal to 0 and the vehicle steering acceleration is greater than 0,

S111: the vehicle is in a curve entering convergence state.

When the vehicle is in the curve entering convergence state, that the output torque of the rear driver of the vehicle is increased includes: A predetermined first convergence coefficient c₅ is obtained, and a product of the first single-step torque adjustment step size and the first convergence coefficient c₅ is taken as a third single-step torque adjustment step size. The first convergence coefficient c₅ is greater than 0 and less than 1. The output torque of the rear driver of the vehicle is increased in a stepwise manner based on the third single-step torque adjustment step size. For an optional range and an optional value of c₅, refer to the above-mentioned comparison table.

In this embodiment, when the vehicle completes curve entering progress, the vehicle enters into the curve entering convergence state. In this state, the steering wheel angular velocity is equal to 0 and the vehicle steering acceleration is greater than 0. That is, when the vehicle is in the curve entering convergence state, the steering wheel angle is controlled to remain unchanged to avoid oversteer. In this state, the vehicle is still in a turning state due to a signal delay.

When the vehicle is in the curve entering convergence state, it is necessary to slow down the increase of the output torque of the rear driver of the vehicle. Specifically, the predetermined first convergence coefficient c₅ is first obtained, and the product of the first single-step torque adjustment step size and the first convergence coefficient c₅ is taken as the third single-step torque adjustment step size. Then the output torque of the rear driver of the vehicle is increased in a stepwise manner based on the third single-step torque adjustment step size. The first convergence coefficient c₅ is greater than 0 and less than 1. In this embodiment, the first convergence coefficient c₅ is set, and for an optional range and an optional value of c₅, refer to the above-mentioned comparison table. The third single-step torque adjustment step size is reduced by the first convergence coefficient c₅, thereby slowing down the increase of the output torque of the rear driver of the vehicle, avoiding oversteer caused by a signal delay, and ensuring curve entering stability and safety of the vehicle.

In this implementation, the relationship between the steering wheel angular velocity and 0 and the relationship between the vehicle steering acceleration and 0 may be determined by the threshold range formed by the above predetermined steering wheel angular velocity and predetermined yaw angle acceleration.

Optionally, the curve exiting state further includes a curve exiting convergence state, and if the steering wheel angular velocity is equal to 0 and the vehicle steering acceleration is less than 0, it is determined that the vehicle is in the curve exiting convergence state. For example, as shown in FIG. 4, the curve exiting convergence state is shown in ⑧.

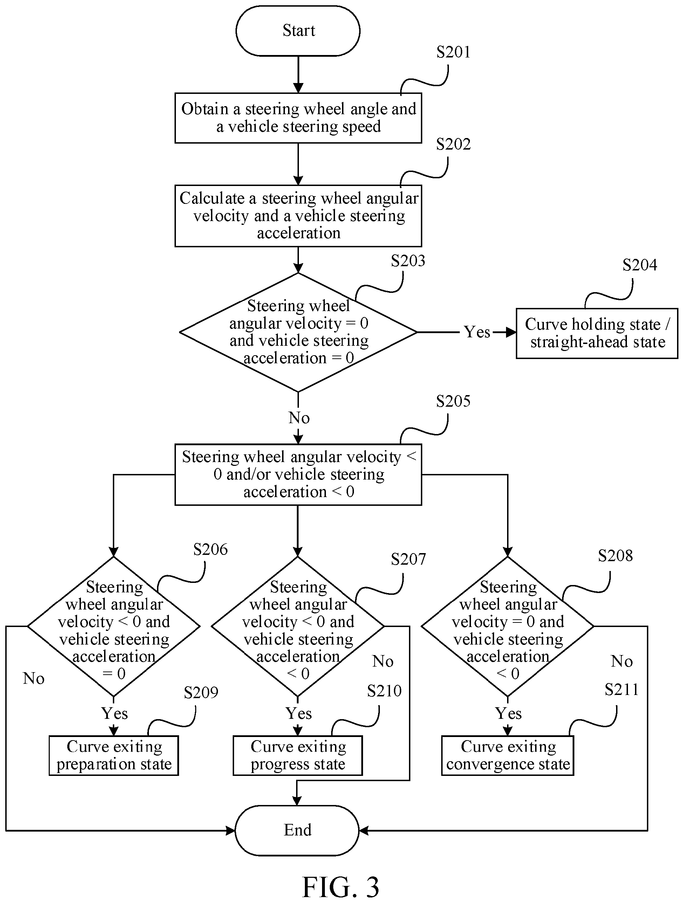

A flowchart of determining another driving state of a vehicle according to the present disclosure is described below with reference to FIG. 3, mainly including the following steps.

S201: A steering wheel angle and a vehicle steering speed are obtained.

S202: A steering wheel angular velocity and a vehicle steering acceleration are calculated.

S203: It is determined whether the steering wheel angular velocity and the vehicle steering acceleration are both equal to 0.

S204: If yes, the vehicle is in a curve holding state or a straight-ahead state.

S205: If not, and the steering wheel angular velocity is less than 0 and/or the vehicle steering acceleration is less than 0, next determining is entered.

S206: If the steering wheel angular velocity is less than 0 and the vehicle steering acceleration is equal to 0,

S209: the vehicle is in a curve exiting preparation state.

S207: If the steering wheel angular velocity is less than 0 and the vehicle steering acceleration is less than 0,

S210: the vehicle is in a curve exiting progress state.

S208: If the steering wheel angular velocity is equal to 0 and the vehicle steering acceleration is less than 0,

S211: the vehicle is in a curve exiting convergence state.

When the vehicle is in the curve exiting convergence state, that the output torque of the front driver of the vehicle is increased includes: A predetermined second convergence coefficient c₆ is obtained, and a product of the second single-step torque adjustment step size and the second convergence coefficient c₆ is taken as a fourth single-step torque adjustment step size. The second convergence coefficient c₆ is greater than 0 and less than 1. The output torque of the front driver of the vehicle is increased in a stepwise manner based on the fourth single-step torque adjustment step size.

In this embodiment, when the vehicle completes curve exiting progress, the vehicle enters into the curve exiting convergence state. In this state, the steering wheel angular velocity is equal to 0 and the vehicle steering acceleration is less than 0. That is, when the vehicle is in the curve exiting convergence state, the steering wheel angle is controlled to remain unchanged to avoid oversteer. In this state, the vehicle is still in a curve exiting recovery state due to a signal delay.

When the vehicle is in the curve exiting convergence state, it is necessary to slow down the increase of the output torque of the front driver of the vehicle. Specifically, the predetermined second convergence coefficient c₆ is first obtained, and the product of the second single-step torque adjustment step size and the second convergence coefficient c₆ is taken as the fourth single-step torque adjustment step size. Then the output torque of the front driver of the vehicle is increased in a stepwise manner based on the fourth single-step torque adjustment step size. The second convergence coefficient c₆ is greater than 0 and less than 1. In this embodiment, the second convergence coefficient c₆ is set, so that the fourth single-step torque adjustment step size is reduced by the second convergence coefficient c₆, thereby slowing down the increase of the output torque of the front driver of the vehicle, avoiding oversteer, and ensuring curve exiting stability and safety of the vehicle.

In this implementation, the relationship between the steering wheel angular velocity and 0 and the relationship between the vehicle steering acceleration and 0 may be determined by the threshold range formed by the above predetermined steering wheel angular velocity and predetermined yaw angle acceleration.

The present disclosure further provides a processing apparatus 0. The processing apparatus 0 is applied to the above vehicle torque adjustment method. The processing apparatus 0 can correspondingly adjust the output torques of the drivers of the vehicle based on the current different driving states of the vehicle, so that the output torques of the front driver and the rear driver of the vehicle are properly adjusted, thereby avoiding understeer or oversteer. As shown in FIG. 5, the processing apparatus includes:
a signal acquisition module 1, configured to obtain a steering wheel angle and a vehicle steering speed parameter;
a state determining module, configured to determine a current driving state of a vehicle based on the steering wheel angle and the vehicle steering speed parameter; and
a driver adjusting module 3, configured to adjust output torques of a front driver and a rear driver of the vehicle based on the current driving state of the vehicle.

In the processing apparatus 0 according to the present disclosure, the signal acquisition module 1 obtains the steering wheel angle and the vehicle steering speed and then transmits a signal to the state determining module, and the state determining module determines a current driving state of the vehicle based on the obtained signal. Finally the driver adjusting module 3 adjusts the output torques of the front driver and the rear driver based on the driving state.

The present disclosure further provides a vehicle. The vehicle includes a front driver, a rear driver, and a controller. The controller is configured to perform the aforementioned vehicle torque adjustment method to control output torques of the front driver and the rear driver.

The present disclosure further provides a computer-readable storage medium. The computer-readable storage medium stores a computer program, and when the computer program is executed, the aforementioned vehicle torque adjustment method is implemented.

The above embodiments focus on differences between the various embodiments, and different optimization features between the various embodiments can be combined to form better embodiments as long as they are not contradictory. Considering brevity, details are not described herein.

Although some specific embodiments of the present disclosure have been described in detail by way of examples, a person skilled in the art should understand that the foregoing examples are only for description and are not intended to limit the scope of the present disclosure. It should be understood by a person skilled in the art that modifications may be made to the foregoing embodiments without departing from the scope and spirit of the present disclosure. The scope of the present disclosure is defined by the appended claims.

## Claims

1. A vehicle torque control method, comprising:
obtaining a steering wheel angle and a vehicle steering speed parameter;
determining a current driving state of a vehicle based on the steering wheel angle and the vehicle steering speed parameter; and
controlling output torques of a front driver and a rear driver of the vehicle based on the current driving state of the vehicle.

2. The method according to claim 1, wherein
the driving state comprises a curve entering state and a curve exiting state; and
the determining a current driving state of a vehicle based on the steering wheel angle and a vehicle steering acceleration parameter comprises:
calculating a steering wheel angular velocity and the vehicle steering acceleration parameter; and
determining that the driving state is a curve entering state when one of the steering wheel angular velocity or the vehicle steering acceleration parameter is greater than 0,
determining that the driving state is a curve exiting state when one of the steering wheel angular velocity or the vehicle steering acceleration parameter is less than 0.

3. The method according to either of claims 1 and 2, wherein the controlling output torques of a front driver and a rear driver of the vehicle based on the current driving state of the vehicle comprises:
reducing, if the vehicle is in a curve entering state, the output torque of the front driver of the vehicle or increasing the output torque of the rear driver of the vehicle, or reducing the output torque of the front driver of the vehicle and increasing the output torque of the rear driver of the vehicle,
increasing, if the vehicle is in a curve exiting state, the output torque of the front driver of the vehicle or reducing the output torque of the rear driver of the vehicle, or increasing the output torque of the front driver of the vehicle and reducing the output torque of the rear driver of the vehicle.

4. The method according to any one of claims 1 to 3, wherein the controlling output torques of a front driver and a rear driver of the vehicle based on the current driving state of the vehicle comprises:
reducing, if the vehicle is in a curve entering state, the output torque of the front driver of the vehicle and increasing the output torque of the rear driver of the vehicle, a total output torque of the front driver and the rear driver remaining unchanged,
increasing, if the vehicle is in a curve exiting state, the output torque of the front driver of the vehicle and reducing the output torque of the rear driver of the vehicle, the total output torque of the front driver and the rear driver remaining unchanged.

5. The method according to any one of claims 1 to 4, wherein
the curve entering state comprises a curve entering preparation state and a curve entering progress state;
if the steering wheel angular velocity is greater than 0 and the vehicle steering acceleration parameter is equal to 0, it is determined that the vehicle is in the curve entering preparation state,
if the steering wheel angular velocity is greater than 0 and the vehicle steering acceleration parameter is greater than 0, it is determined that the vehicle is in the curve entering progress state; and
when the vehicle is in the curve entering preparation state or the curve entering progress state, the increasing the output torque of the rear driver of the vehicle comprises:
determining a first single-step torque adjustment step size based on a current output torque of the rear driver and the steering wheel angle; and
increasing the output torque of the rear driver of the vehicle in a stepwise manner based on the first single-step torque adjustment step size.

6. The method according to claim 5, wherein the determining a first single-step torque adjustment step size based on a current output torque of the rear driver and the steering wheel angle comprises:
determining a first adjustment step size coefficient based on the current output torque of the rear driver, and determining a second adjustment step size coefficient proportional to the steering wheel angle based on the steering wheel angle, the first single-step torque adjustment step size being a product of the first adjustment step size coefficient and the second adjustment step size coefficient.

7. The method according to any one of claims 2 to 6, wherein
the curve exiting state comprises a curve exiting preparation state and a curve exiting progress state;
if the steering wheel angular velocity is less than 0 and the vehicle steering acceleration parameter is equal to 0, it is determined that the vehicle is in the curve exiting preparation state,
if the steering wheel angular velocity is less than 0 and the vehicle steering acceleration parameter is less than 0, it is determined that the vehicle is in the curve exiting progress state; and
if the vehicle is in the curve exiting preparation state or the curve exiting progress state, the increasing the output torque of the front driver of the vehicle comprises:
determining a second single-step torque adjustment step size based on a current output torque of the front driver and the steering wheel angle; and
increasing the output torque of the front driver of the vehicle in a stepwise manner based on the second single-step torque adjustment step size.

8. The method according to claim 7, wherein the determining a second single-step torque adjustment step size based on a current output torque of the front driver and the steering wheel angle comprises:
determining a third adjustment step size coefficient based on the current output torque of the front driver, and determining a fourth adjustment step size coefficient proportional to the steering wheel angle based on the steering wheel angle, the second single-step torque adjustment step size being a product of the third adjustment step size coefficient and the fourth adjustment step size coefficient.

9. The method according to any one of claims 2 to 8, wherein
the curve entering state further comprises a curve entering convergence state, and if the steering wheel angular velocity is equal to 0 and the vehicle steering acceleration parameter is greater than 0, it is determined that the vehicle is in the curve entering convergence state; and
when the vehicle is in the curve entering convergence state, the increasing the output torque of the rear driver of the vehicle comprises:
obtaining a predetermined first convergence coefficient, and taking a product of the first single-step torque adjustment step size and the first convergence coefficient as a third single-step torque adjustment step size, wherein the first convergence coefficient is greater than 0 and less than 1; and
increasing the output torque of the rear driver of the vehicle in a stepwise manner based on the third single-step torque adjustment step size.

10. The method according to any one of claims 2 to 9, wherein
the curve exiting state further comprises a curve exiting convergence state, and if the steering wheel angular velocity is equal to 0 and the vehicle steering acceleration parameter is less than 0, it is determined that the vehicle is in the curve exiting convergence state; and
when the vehicle is in the curve exiting convergence state, the increasing the output torque of the front driver of the vehicle comprises:
obtaining a predetermined second convergence coefficient, and taking a product of the second single-step torque adjustment step size and the second convergence coefficient as a fourth single-step torque adjustment step size, wherein the second convergence coefficient is greater than 0 and less than 1; and
increasing the output torque of the front driver of the vehicle in a stepwise manner based on the fourth single-step torque adjustment step size.

11. The method according to any one of claims 1 to 10, wherein
the driving state comprises a curve holding state and a straight-ahead state;
if the steering wheel angular velocity is 0 and the vehicle steering acceleration parameter is also 0, the vehicle is in the curve holding state or the straight-ahead state; and
when the vehicle is in the curve holding state or the straight-ahead state, the controlling output torques of a front driver and a rear driver of the vehicle comprises:
keeping the output torques of the front driver and the rear driver of the vehicle unchanged.

12. The method according to any one of claims 1 to 11, wherein the steering speed parameter comprises at least one of the following parameters: a yaw rate, a sideslip angular velocity and a lateral velocity; and
the steering acceleration parameter comprises at least one of the following parameters: a yaw angle acceleration, a sideslip angle acceleration and a lateral acceleration.

13. A processing apparatus applied to the vehicle torque control method according to any one of claims 1 to 12, **characterized by** comprising:
a signal acquisition module (1), configured to obtain a steering wheel angle and a vehicle steering speed parameter;
a state determining module (2), configured to determine a current driving state of a vehicle based on the steering wheel angle and the vehicle steering speed parameter; and
a driver adjusting module (3), configured to control output torques of a front driver and a rear driver of the vehicle based on the current driving state of the vehicle.

14. A vehicle, comprising a front driver, a rear driver, and the processing apparatus according to claim 13, the processing apparatus being configured to perform the vehicle torque control method according to any one of claims 1 to 12 to control output torques of the front driver and the rear driver.

15. A computer-readable storage medium, wherein the computer-readable storage medium stores a computer program, the vehicle torque control method according to any one of claims 1 to 12 being implemented when the computer program is executed.
